Europäisches Patentamt

(19) European Patent Office

Office européen des brevets

(11) Numéro de publication: **0 136 951 B1**

(12) **FASCICULE DE BREVET EUROPEEN**

(45) Date de publication du fascicule du brevet: **12.10.88**

(51) Int. Cl.⁴: **G 03 B 21/10**, G 03 B 21/30

(21) Numéro de dépôt: **84401941.4**

(22) Date de dépôt: **28.09.84**

(54) **Appareil mixte de projection et de rétroprojection de diapositives.**

(30) Priorité: **30.09.83 FR 8315588**

(43) Date de publication de la demande:
**10.04.85 Bulletin 85/15**

(45) Mention de la délivrance du brevet:
**12.10.88 Bulletin 88/41**

(84) Etats contractants désignés:
**AT BE CH DE FR GB IT LI LU NL SE**

(56) Documents cités:
**EP-A-0 050 761**
**DE-A-3 029 195**
**DE-C-944 655**
**FR-A-1 365 421**
**US-A-2 769 368**
**US-A-3 885 868**
**US-A-4 163 610**

(73) Titulaire: **PRESTINOX S.A. Société Anonyme dite:**
**31 à 35 Route de Tremblay Boîte Postale No 5**
**F-93420 Villepinte (FR)**

(72) Inventeur: **Bodier, Jacques**
**6, Hameau des Erables**
**F-77410 Claye-Souilly (FR)**
Inventeur: **Cochard, Pierre**
**2, Route de Paris**
**F-89320 Cerisiers (FR)**
Inventeur: **Merlier, Christian**
**28, Avenue Voltaire**
**F-93190 Livry Gargan (FR)**
Inventeur: **Bouquin, Paul Edouard**
**12, Domont Village**
**F-95330 Domont (FR)**

(74) Mandataire: **Bruder, Michel**
**10 rue de la Pépinière**
**F-75008 Paris (FR)**

EP 0 136 951 B1

Courier Press, Leamington Spa, England.

## Description

La présente invention concerne un appareil de projection et de rétroprojection di diapositives.

Les appareils de projection de diapositives connus à ce jour comportent généralement une embase sur laquelle est monté le boîtier du projecteur, boîtier dans lequel est logé une source lumineuse et qui porte un objectif. Les diapositives devant être projetées sont généralement contenues dans des magasins réalisés sous la forme de paniers rotatifs ou coulissants, chaque diapositive devant être projetée étant entraînée, hors du panier la contenant, par un poussoir à mouvement transversal, pour être amenée dans une position située entre la source lumineuse et l'objectif, et pour être ensuite ramenée dans le panier, après projection, par un mouvement inverse du poussoir transversal.

Ces appareils de projection de diapositives qui sont actuellement très répandus, présentent l'inconénient d'exiger, pour la projection directe des diapositives, la mise en place d'un écran indépendant qui doit être déployé verticalement en avant de l'objectif. Le propriétaire d'un appareil de projection de diapositives doit donc posséder un écran indépendant, d'où des problèmes d'encombrement, de stockage et de commodité d'emploi. En effet le fait d'avoir à sortir un écran repliable de son lieu de rangement et de le déployer constitue une opération peu commode qui a pour résultat que les propriétaires d'appareil de projection de diapositives utilisent assez peu ceux-ci en pratique.

Certains appareils connus, tels que ceux décrits dans les brevets US—3 885 868, 4 163 610, DE—3 029 195 et EP—A—50761, sont équipés d'un écran de rétroprojection, en verre dépoli, et d'un miroir mobile pouvant occuper deux positions, à savoir une position de projection directe dans laquelle le miroir est situé à l'écart par rapport à l'objectif, à côté ou au-dessus de celui-ci, pour laisser sortir le faisceau lumineux de projection directe, et une position de rétroprojection dans laquelle il est interposé immédiatement devant l'objectif.

Les appareils suivant les brevets US—3 885 868 et 4 163 610 présentent toutefois l'inconvénient d'être encombrants en hauteur et d'avoir une structure interne relativement complexe, à trois miroirs de renvoi du faisceau lumineux. Quant à l'appareil suivant le brevet DE—3 029 195, il assure en fait, lorsque le miroir est placé devant l'objectif, une projection sur un écran dépoli de petites dimensions prévu dans une paroi latérale du boîtier et il joue dans ce cas uniquement le rôle d'une visionneuse et non pas celui d'un appareil de rétroprojection produisant une image de grandes dimensions pouvant être observée par plusieurs personnes. Enfin l'appareil décrit dans le brevet EP—A—50761 exige un mécanisme complexe pour soulever l'écran de rétroprojection bien au-dessus du boîtier de l'appareil en position de rétroprojection.

La présente invention vise à remédier à ces divers inconvénients en procurant un appareil de projection et de rétroprojection de diapositives de conception particulièrement simple et dans lequel sont incorporés des moyens permettant d'assurer aisément une rétroprojection des diapositives, dans d'excellentes conditions de reproduction et d'observation.

A cet effet cet appareil de projection et de rétroprojection de diapositives contenues dans un panier comprenant un boîtier contenant une source de lumière avec un objectif de projection et comportant une paroi antérieure mobile percée d'une fenêtre située devant l'objectif et le panier contenant les diapositives, un écran de rétroprojection articulé sur la face supérieure du boîtier, autour d'un axe horizontal et transversal, et un miroir porté par la paroi antérieure mobile étant incline pour réfléchir en direction de cet écran de rétroprojection le faisceau lumineux issue de l'objectif, ce miroir étant monté coulissant transversalement, c'est-à-dire perpendiculairement à l'axe optique, sur la paroi antérieure mobile pour être déplacable entre une position de rétroprojection, ce miroir étant décalé latéralement, en position de projection directe, de manière à laisser le libre passage au faisceau lumineux issu de l'objectif, à travers la fenêtre, et étant placé en avant de l'objectif et dans l'axe de celui-ci, lorsqu'on désire effectuer une rétroprojection d'une diapositive, est caractérisé en ce que la paroi antérieure mobile du boîtier est montée coulissante longitudinalement, c'est-à-dire parallèlement à l'axe optique de l'objectif.

Suivant une forme d'exécution de l'invention dans laquelle la paroi antérieure mobile du boîtier est montée pivotante, à sa partie inférieure, autour d'un axe horizontal et transversal, le miroir est solidaire de la partie supérieure de la paroi antérieure et il s'étend vers l'intérieur du boîtier, au-dessus de l'objectif lorsque l'appareil est en position de projection directe et est placé en avant de l'objectif (3) dans la position de rétroprojection en rabattant la paroi antérieure.

Suivant une variante d'exécution de l'invention dans laquelle la paroi antérieure mobile du boîtier est montée pivotante, à sa partie inférieure, autour d'une axe horizontal et transversal, le miroir est monté pivotant sur la face inter la paroi antérieure mobile, de manière à pouvoir être interposé devant l'objectif et étant éloigné additionnellement de l'objectif en position de rétroprojection.

L'appareil de projection de diapositives suivant l'invention offre l'avantage qu'il peut être utilisé tel quel, sans adaptation particulière, aussi bien pour la projection directe des diapositives que pour leur rétroprojection, l'observation des images projetées suivant l'un ou l'autre de ces modes n'exigeant aucun déplacement de l'utilisateur qui demeure derrière l'appareil. En outre l'encombrement de l'appareil est très réduit, sa structure à un seul miroir mobile est particulièrement simple et il permet la rétroprojection d'une image de grandes dimensions.

On décrira ci-après, à titre d'exemples non limitatifs, diverses formes d'exécution de la présente invention, en référence au dession annexé sur lequel:

La figure 1 est une vue en élévation schématique d'un appareil de projection et de rétroprojection de diapositives suivant l'invention, en position de rétroprojection.

La figure 2 est une vue de face de l'appareil en position de rétroprojection.

La figure 3 est une vue en élévation de l'appareil en position de projection directe.

La figure 4 est une vue de face de l'appareil en position de projection directe.

La figure 5 est une vue en élévation d'une variante d'éxécution de l'appreil, en position de rétroprojection.

La figure 6 est une vue en élévation de l'appareil de la figure 5 en position de projection directe.

La figure 7 est une vue en élévation d'une autre variante d'exécution de l'appareil, en position de rétroprojection.

La figure 8 est une vue en plan de l'appareil de la figure 7.

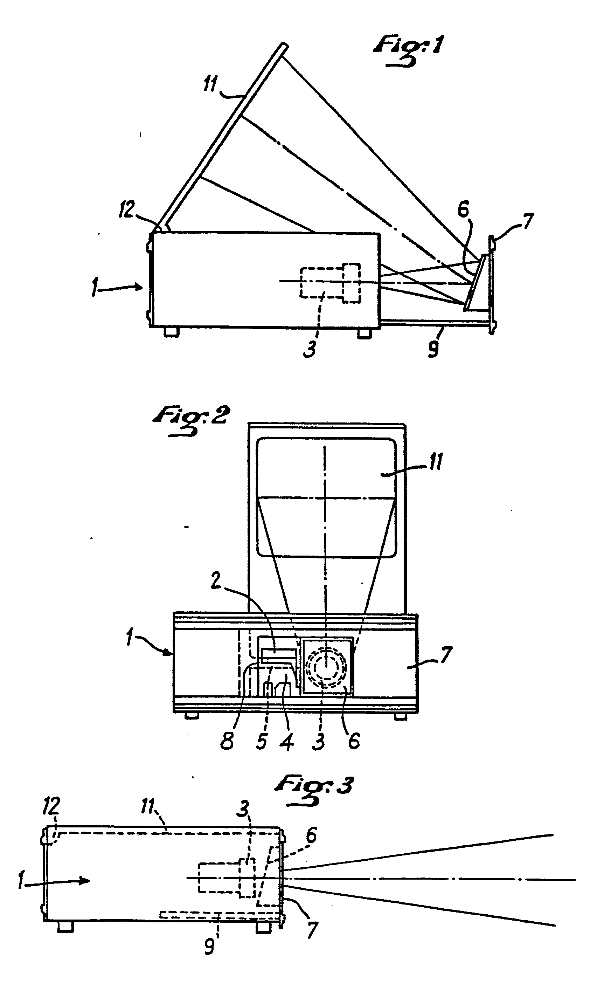

L'appareil de projection et de rétroprojection de diapositives représenté sur les figures 1 à 4 comprend un boîtier 1, de forme parallélèpipédique, à l'intérieur duquel sont logés le système optique permettant la projection de diapositives ainsi que tous les composants électriques et électroniques habituels. Ce système optique comprend, de la manière habituelle, une source lumineuse non représentée et un objectif 3, alignés longitudinalement. Les diapositives 2 sont de préférence stockées les unes à la suite des autres dans un magasin 4 constitué par un panier coulissant dans le sens longitudinal. Chaque diapositive 2 peut être amenée en position de projection, dans laquelle elle se trouve située entre la source lumineuse et l'objectif 3, par un poussoir 5 animé d'un mouvement transversal et commandé manuellement ou automatiquement.

L'appareil suivant l'invention est pourvu de moyens permettant d'assurer, outre la projection directe des diapositives, une rétroprojection de celles-ci. Ces moyens comportent un miroir 6 qui est situé normalement à l'écart du faisceau lumineux issu de l'objectif 3 et qui peut être interposé sur le trajet de ce faisceau lumineux lorsque l'on désire effectuer une rétroprojection.

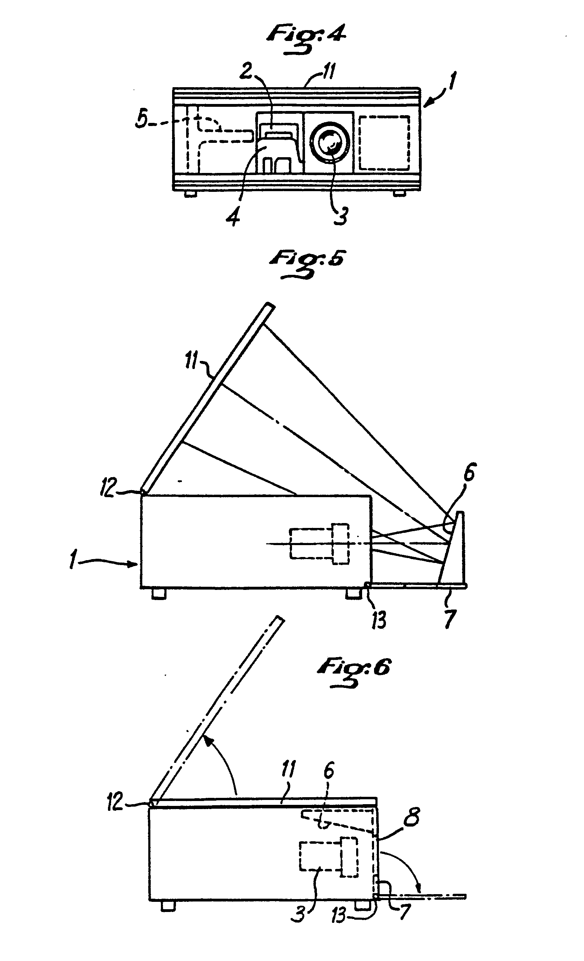

Dans la forme d'exécution non limitative représentée sur les figures 1 à 4 le miroir 6 qui est incliné est monté coulissant transversalement, c'est-à-dire perpendiculairement à l'axe optique, sur la face interne de la paroi verticale antérieure 7 du boîtier 1. Cette paroi 7 présente, dans sa partie centrale, une fenêtre rectangulaire 8 qui s'étend devant l'objectif 3 et le panier 4. Par conséquent, lorsque l'appareil est utilisé en projection directe, le faisceau lumineux issu de l'objectif 3 peut sortie librement de, à travers la fenêtre 8, pour venir frapper un écran placé à distance et par ailleurs la fenêtre 8 permet également la sortie progressive du panier 4 constituant le magasin des diapositives 2, au fur et à mesure que celles-ci sont projectées. En position de projection directe (figures 3 et 4), le miroir 6 se trouve être décalé latéralement, sur la face interne de la paroi 7, de manière à laisser le libre passage au faisceau lumineux issu de l'objectif 3, à travers la fenêtre 8. Par contre lorsqu'on désire effectuer une rétroprojection d'une diapositive, on amène le miroir 6 en avant de l'objectif 3 et dans l'axe de celui-ci à une plus grande distance, dépendant de la distance focale de cet objectif, que dans le cas de la projection directe. A cet effet la paroi antérieure 7 bu boîtier 1 est montée coulissante longitudinalement, c'est-à-dire parallèlement à l'axe optique de l'objectif 3. La paroi verticale 7 est solidaire d'un support horizontal 9 coulissant dans une glissière appropriée prévue dans la partie inférieure du boîtier 1. Par conséquent, une fois la paroi antérieure 7 tirée vers l'avant, en position de rétroprojection, comme il est représenté sur la figure 1, il suffit de faire coulisser transversalement le miroir 6, sur la face interne de la paroi antérieure 7, pour l'amener dans l'axe de l'objectif 3.

Par ailleurs, le boîtier 1, porte sur sa face supérieure, un écran dépoli de rétroprojection 11 qui est articulé sur la face horizontale supérieure du boîtier 1, autour d'un axe horizontal et transversal 12 située à l'arrière de l'appareil. Pour permettre la rétroprojection d'une diapositive on fait pivoter l'écran 11 de sa position escamotée horizontale (figures 3 et 4), dans laquelle il est appliqué sur ou encastré dans la face horizontale supérieure du boîtier 1, dans le sens inverse des aiguilles d'une montre autour de l'axe 12, pour l'amener dans la position inclinée de bas en haut et d'arrière en avant que est représentée sur les figures 1 et 2. De ce fait, le faisceau lumineux issu de l'objectif 3 est réfléchi par le miroir 6 vers le haut et vers l'arrière, en direction de l'écran dépoli 11 si bien que l'utilisateur se trouvant toujours à l'arrière de l'appareil peut voir devant lui une image de grandes dimensions projetée sur cet écran dépoli 11, cette image étant droite et donc n'exigeant pas l'inversion des diapositives dans leur panier.

En position de rétroprojection le miroir 6 est déplacé suffisamment vers l'avant pour que le faisceau lumineux réfléchi vers le haut et vers l'arière ne soit pas intercepté par la face frontale antérieure du boîtier 1. A cet effet la face frontale peut être éventuellement évidée, dans sa partie supérieure centrale, pour laisser un passage libre à la partie inférieure du faisceau lumineux réfléchi.

Le passage de la position de rétroprojection à la position de projection directe s'effectue très aisément puisqu'il suffit de faire coulisser horizontalement et transversalement le miroir 6 sur la face interne de la paroi verticale 7, pour l'amener en position décalée latérale, de faire rentrer ensuite le support 9 à l'intérieur du boîtier 1, de manière que la paroi antérieure 7 soit proche de l'objectif 3, et de rabattre l'écran dépoli 11 sur la face horizontale supérieure du boîtier 1.

Les figures 5 et 6 illustrent une variante d'exécution de l'appareil dans laquelle la paroi verticale antérieure 7 du boîtier 1 est non plus coulissante mais montée pivotante à sa partie inférieure, autour d'un axe horizontale et transversal 13. Par ailleurs le miroir 6 est solidaire de la partie supérieure, située au-dessus de la fenêtre 8, de la paroi antérieure 7 et il s'étend vers l'intérieur du boîtier, au-dessus de l'objectif 3, en étant incliné lorsque l'appareil est en position de projection directe, comme il est représenté sur la figure 6. Dans cette position l'écran dépoli 11 est rabattu par dessus le miroir 6. Pour passer en position de rétroprojection, il suffit de faire pivoter l'écran dépoli 11 autour de l'axe horizontal et transversal 12, comme on l'a vu précédemment, pour l'amener en position inclinée de bas en haut et d'arrière en avant (fig. 5), au-dessus du boîtier 1, et faire ensuite pivoter la paroi antérieure 7 autour de l'axe 13, pour l'amener à l'horizontale, comme il est représenté sur la figure 5. Dans cette position le miroir 6 se trouve être placé à distance devant l'objectif 3 en étant incliné de l'angle approprié pour la réflexion du faisceau lumineux en direction de l'écran dépoli 11, la distance du miroir 6 par rapport à l'objectif 3 dépendant de la distance focale de celui-ci et étant suffisante pour que le faisceau lumineux réfléchi ne soit pas intercepté par la face frontale antérieure du boîtier 1.

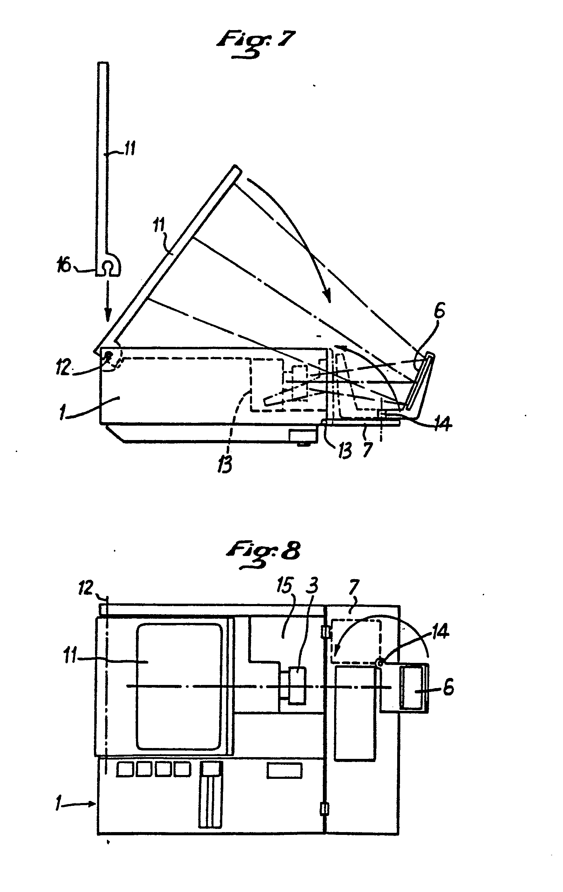

Dans la variante d'exécution illustrée sur les figures 7 et 8 le miroir 6 est monté pivotant sur la face interne de la paroi verticale 7, et ce autour d'un axe 14 perpendiculaire à cette paroi verticale 7. Sur la figure 7 le miroir 6 est représenté en trait plein dans la position dans laquelle il se trouve être interposé devant l'objectif 3, la paroi verticale 7 étant rabattue horizontalement en avant de l'appareil, en tirets dans la position dans laquelle il se trouve sur cette paroi 7 alors horizontale avant pivotement de 180°, et en trait mixte lorsque la paroi 7 est verticale et que le miroir 6 se trouve alors placé dans un logement 15 à l'intérieur du boîtier de l'appareil.

L'appareil représenté sur les figures 7 et 8 comporte également un écran dépoli 11 qui est amovible pour faciliter l'accessibilité dans la fonction projection. A cet effet l'écran 11 présente, à son extrémité qui est articulée autour de l'axe horizontal et transversal 12, une partie 16 en forme de fourche venant se clipser sur l'axe 12 pour permettre le pivotement de l'écran dépoli 11 et son enlèvement facile.

Lorsque le projecteur se trouve en position de rétroprojection, comme il est illustré sur les figures 7 et 8, il suffit, pour le faire passer en position de projection directe, de faire pivoter le miroir 6 et 180° autour de l'axe 14, puis de relever la paroi 7 en position verticale, le miroir venant alors se placer dans son logement 15, et enfin d'abaisser l'écran dépoli 11 en position horizontale ou de la retirer dans le cas d'une utilisation avec un panier rotatif.

## Revendications

1. Appareil de projection et de rétroprojection de diapositives (2) contenues dans un panier (4) comprenant un boîtier (1) contenant une source de lumière avec un objectif de projection (3) et comportant une paroi antérieure mobile (7) percée d'une fenêtre (8) située devant l'objectif (3) et le panier (4) contenant les diapositives (2), un écran de rétroprojection (11) articulé sur la face supérieure du boîtier (1), autour d'un axe horizontal et transversal (12) et un miroir (6) porté par la paroi antérieure mobile (7) étant incliné pour réfléchir en direction de cet écran de rétroprojection, le faisceau lumineux issu de l'objectif, ce miroir (6) étant monté coulissant transversalement, c'est-à-dire perpendiculairement à l'axe optique, sur la paroi antérieure mobile (7) pour être déplacable entre une position de rétroprojection et une position de projection directe, ce miroir (6) étant décalé latéralement, en position de projection directe, de manière à laisser le libre passage au faisceau lumineux issue de l'objectif (3), à travers la fenêtre (8), et étant placé en avant de l'objectif (3) et dans l'axe de celui-ci, lorsqu'on désire effectuer une rétroprojection d'une diapositive, caractérisé en ce que la paroi antérieure mobile (7) du boîtier (1) est montée coulissante longitudinalement, c'est-à-dire parallèlement à l'axe optique de l'objectif (3).

2. Appareil suivant la revendication 1 caractérisé en ce que la paroi antérieure mobile (7) du boîtier (1) est solidaire d'un support horizontal (9) coulissant dans une glissière appropriée prévue dans la partie inférieure du boîtier (1).

3. Appareil de projection et de rétroprojection de diapositives (2) contenues dans un panier (4) comprenant un boîtier (1) contenant une source de lumière avec un objectif de projection (3) et comportant une paroi antérieure mobile (7) percée d'une fenêtre (8) située devant l'objectif (3) et le panier (4) contenant les diapositives (2), un écran de rétroprojection (11) articulé sur la face supérieure du boîtier (1), autour d'un axe horizontal et transversal (12), et un miroir (6) porté par la paroi antérieure mobile (7) étant incliné pour réfléchir en direction de cet écran de rétroprojection, le faisceau lumineux issu de l'objectif, ce miroir (6) étant déplacable entre une position de rétroprojection et une position de projection directe, la paroi antérieure mobile (7) du boîtier (1) étant montée pivotante, à sa partie inférieure, autour d'un axe horizontal et transversal (13), caractérisé en ce que le miroir (6) est solidaire de la partie supérieure de la paroi antérieure (7) et s'étend vers l'intérieur du boîtier, au-dessus de l'objectif (3) lorsque l'appareil est en position de projection directe et est placé en avant de l'objectif (3) dans la position de rétroprojection en rabattant la paroi antérieure (7).

4. Appareil de projection et de rétroprojection de diapositives (2) contenues dans un panier (4) comprenant un boîtier (1) contenant une source de lumière avec un objectif de projection (3) et comportant une paroi antérieure mobile (7) qui est montée pivotante à sa partie inférieure, autour d'un axe horizontal et transversal (13), un écran de rétroprojection (11) articulé sur la face supérieure du boîtier (1), autour d'un axe horizontal et transversal (12), et un miroir (6) porté par la paroi antérieure mobile (7) étant incliné pour réfléchir en direction de cet écran de rétroprojection, le faisceau lumineux issu de l'objectif, ce miroir (6) pouvant être déplacé entre une position de rétroprojection et une position de projection directe dans laquelle le miroir (6) est à l'écart du faisceau lumineux pour le laisser passer en direction d'un écran placé à distance, caractérisé en ce que le miroir (6) est monté pivotant sur la face interne de la paroi antérieure mobile (7), de manière à pouvoir être interposé devant l'objectif et étant éloigné additionnellement de l'objectif en position de rétroprojection.

5. Appareil suivant l'une quelconque des revendications précédentes caractérisé en ce que l'écran de rétroprojection (11) est monté de manière amovible sur l'axe horizontal et transversal (12).

**Patentansprüche**

1. Vorwärts- und Rückwärtsprojektionsgerät für Diapositive (2), die in einem Magazin (4) enthalten sind, bestehend aus einem Gehäuse (1) versehen mit einer Lichtquelle mit einem Projectionsobjectiv (3) und mit einer beweglichen Vorderwand (7), die ein Fenster (8) besitzt, das sich vor dem Objektiv (3) und dem Magazin (4), das die Diapositive (2) enthält, erstreckt, einer Rückwärtsprojektionswand (11), die auf der oberen Seite des Gehäuses (1) um eine waagrechte und querliegende Achse (12) gelenkig angebracht ist, und einem Spiegel (6), der von der beweglichen Vorderwand (7) getragen wird und der geneigt ist, um den aus dem Objektiv austretenden Lichtstrahl in die Richtung dieser Rückwärtsprojektionswand zu reflektieren, wobei dieser Spiegel (6) querverschieblich, das heißt, senkrecht zur optischen Achse, auf der beweglichen Vorderwand (7) angebracht ist, damit er zwischen einer Rückwärtsprojektionsstellung und einer direkten Projektionsstellung verstellbar ist, wobei dieser Spiegel (6) in direkter Projektionsstellung seitwärts versetzt ist, um den Lichtstrahl aus dem Objektiv (3) durch das Fenster (8) ungehindert durchtreten zu lassen, und er vor dem Objektiv (3) in dessen Achse positioniert wird, wenn man eine Rückwärtsprojektion eines Diapositives vornehmen will, dadurch gekennzeichnet, daß die bewegliche Vorderwand (7) des Gehäuses (1) längsverschieblich, das heißt, parallel zu der optischen Achse des Objektivs (3), angebracht ist.

2. Gerät nach Anspruch 1, dadurch gekennzeichnet, daß die bewegliche Vorderwand (7) des Gehäuses (1) mit einer waagrechten Stütze (9) verbunden ist, welche in einer geeigneten Glietschiene, die in dem unteren Teil des Gehäuses (1) vorgesehen ist, verschiebbar angeordnet ist.

3. Vorwärts- und Rückwärtsprojektionsgerät für Diapositive (2), die in einem Magazin (4) enthalten sind, bestehend aus einem Gehäuse (1), vorsehen mit einer Lichtquelle mit einem Projektionsobjektiv (3) und mit einer beweglichen Vorderwand (7), die ein Fenster (8) besitzt, das sich vor dem Objektiv (3) und dem Magazin (4), das die Diapositive (2) enthält, erstreckt, einer Rückwärtsprojektionswand (11), die auf der oberen Seite des Gehäuses (1) um eine waagrechte und querliegende Achse (12) gelenkig angeordnet ist, und einem Spiegel (6), der von der beweglichen Vorderwand (7) getragen wird und der geneigt ist, um den aus dem Objektiv austretenden Lichtstrahl in die Richtung dieser Rückwärtsprojektionswand zu reflektieren, wobei dieser Spiegel (6) zwischen einer Rückwärtsprojektionsstellung und einer direkten Projektionsstellung vorstellbar ist, die bewegliche Vorderwand (7) des Gehäuses (1) an ihrem unteren Teil um eine waggrechte Querachse (13) drehbar gelagert ist, dadurch gekennzeichnet, daß der Spiegel (6) mit dem oberen Teil der beweglichen Vorderwand (7) kraftschlüssig verbunden ist und sich in direkter Projektionsstellung in Richtung auf das Gehäuseinnere, oberhalb des Objektivs (3), erstreckt und in der Rückwärtsprojektionsstellung vor das Objektiv (3) angeordnet wird, wobei die Vorderwand (7) heruntergeklappt ist.

4. Vorwärts- und Rückwärtsprojektionsgerät für Diapositive (2), die in einem Magazin (4) enthalten sind, bestehend aus einem Gehäuse (1), versehen mit einer Lichtquelle mit einem Projektionsobjektiv (3) und mit einer beweglichen Vorderwand (7), die an ihrem unteren Teil um eine waagrechte Querachse (13) drehbar angeordnet ist, einer Rückwärtsprojektionswand (11), die auf der oberen Seite des Gehäuses (1) um eine waagerechte und querliegende Achse (12) gelenkig angeordnet ist, und einem Spiegel (6), der von der beweglichen Vorderwand (7) getragen wird und der geneigt ist, um den aus dem Objektiv austretenden Lichtstrahl in die Richtung dieser Rückwärtsprojektionswand zu reflektieren, wobei dieser Spiegel (6) verstellbar ist zwischen einer Rück-wärtsprojektionsstellung und einer direkten Pro-jektionsstellung, in der der Spiegel (6) sich außerhalbd des Lichtstrahles befindet, um ihn in Richtung einer in einiger Entfernung aufgestellten Leinwand durchzulassen, dadurch gekennzeichnet, daß der Spiegel (6) auf der Innenseite der beweglichen Vorderwand (7) drehbar angebracht ist, damit er in Rückwärtsprojektionsstellung vor dem Objektiv zwischen den Lichtstrahl gesetzt und zusätzlich vom Objektiv entfernt werden kann.

5. Gerät nach einem der vorangehenden Ansprüche dadurch gekennzeichnet, daß die Rückwärtsprojektionswand (11) abnehmbar auf der waagrechten und querliegenden Achse (12) angebracht ist.

**Claims**

1. Apparatus for the direct projection and back-projection of slides (2) contained in a basket (4) comprising a box (1) containing a source of light with a projection lens (3) and comprising a mobile front wall (7) pierced with a window (8) located in front of the lens (3) and the basket (4) containing the slides (2), a back projection screen (11) articulated on the upper face of the box (1), about a horizontal and transverse axis (12), and mirror (6) borne by the mobile front wall (7), being inclined to reflect towards this back-projection screen the light beam issuing from the lens, this mirror (6) being mounted to slide transversely, i.e. perpendicularly to the optical axis, on the mobile front wall (7), to be displaceable between a position of back-projection and a position of direct projection, this mirror (6) being offset laterally, in position of direct projection, so as to leave free passage for the light beam issuing from the lens (3), through the window (8) and being placed in front of the lens (3) and in the axis thereof, when it is desired to effect a back-projection of a slide, characterized in that the mobile front wall (7) of the box (1) is mounted to slide longitudinally, i.e. parallel to the optical axis of the lens (3).

2. Apparatus according to Claim 1, characterized in that the mobile front wall (7) of the box (1) is fast with a horizontal support (9) sliding in an appropriate slideway provided in the lower part of the box (1).

3. Apparatus for projection and back-projection of slides (2) contained in a basket (4) comprising a box (1) containing a source of light with a projection lens (3) and comprising a mobile front wall (7) pierced with a window (8) located in front of the lens (3) and the basket (4) containing the slides (2), a back-projection screen (11) articulated on the upper face of the box (1), about a horizontal and transverse axis (12), and a mirror (6) borne by the mobile front wall (7), being inclined to reflect towards this back-projection screen the light beam issuing from the lens, this mirror (6) being displaceable between a position of back-projection and a position of direct projection, the mobile front wall (7) of the box (1) being mounted to pivot, in its lower part, about a horizontal and transverse axis (13), characterized in that the mirror (6) is fast with the upper part of the front wall (7) and extends inwardly of the box, above the lens (3) when the apparatus is in position of direct projection, and is placed in front of the lens (3) in the position of back-projection by folding down the front wall (7)1

4. Apparatus for projection and back-projection of slides (2) contained in a basket (4) comprising a box (1) containing a source of light with a projection lens (3) and comprising a mobile front wall (7) which is mounted to pivot in its lower part, about a horizontal and transverse axis (13), a back-projection screen (11) articulated on the upper face of the box (1), about a horizontal and transverse axis (12), and a mirror (6) borne by the mobile front wall (7), being inclined to reflect towards this back-projection screen the light beam issuing from the lens, this mirror (6) being able to be displaced between a position of back-projection and a position of direct projection in which the mirror (6) is set aside from the light beam to allow it to pass towards a screen placed at a distance, characterized in that the mirror (6) is mounted to pivot on the inner face of the mobile front wall (7), so as to be able to be interposed in front of the lens and being additionally removed from the lens in position of back-projection.

5. Apparatus according to any one of the preceding Claims, characterized in that the back-projection screen 11 is removably mounted on the horizontal and transverse axis (12).

*Fig:1*

*Fig:2*

*Fig:3*

1

*Fig:4*

*Fig:5*

*Fig:6*

Fig. 7

Fig. 8